# EUROPÄISCHE PATENTSCHRIFT

(11) **EP 0 948 783 B1**
(45) Veröffentlichungstag und Bekanntmachung des Hinweises auf die Patenterteilung: **12.12.2001**
(21) Anmeldenummer: 97948730.3
(22) Anmeldetag: 07.11.1997
(51) Int. Cl.: G08C 25/00, G01L 23/22

(54) **SCHALTUNGSANORDNUNG ZUR STÖRUNGSFREIEN AUSWERTUNG VON SIGNALEN**
CIRCUIT ARRANGEMENT FOR INTERFERENCE-FREE SIGNAL EVALUATION
CIRCUIT POUR EVALUATION SANS PARASITES DE SIGNAUX

(30) Priorität: 24.12.1996 DE 19654329
(43) Veröffentlichungstag der Anmeldung: 13.10.1999
(73) Patentinhaber: ROBERT BOSCH GMBH, 70442 Stuttgart (DE)
(72) Erfinder: UNLAND, Stefan, D-71665 Vaihingen-Kleinglattbach (DE); BURO, Davide, D-72760 Reutlingen (DE); SPACHMANN, Jürgen, D-74372 Sersheim (DE)
(86) Internationale Anmeldenummer: DE9702595
(87) Internationale Veröffentlichungsnummer: WO9828726

(56) Entgegenhaltungen:
- DE-A- 4 222 475
- US-A- 4 667 637
- US-A- 5 170 081

## Beschreibung

Die Erfindung betrifft eine Auswerteschaltung zur störungsfreien Auswertung von Signalen, insbesondere von Ausgangssignalen von Klopfsensoren, nach der Gattung des Hauptanspruchs.

### Stand der Technik

Es ist bekannt, Signale, die beispielsweise von einem Sensor zu einer Auswerteeinheit weitergeleitet werden, mit Hilfe einer geschirmten Leitung zwischen dem Sensor und der Auswerteeinheit zu übertragen. Die Schirmung schützt die Signalübertragung vor Störungen und Verfälschungen des Signales. Die Schirmung einer Leitung ist jedoch relativ kostenaufwendig und gibt dennoch keine Garantie dafür, daß das Signal nicht doch verfälscht wird.

Es wird deshalb in der DE-OS 42 22 475 eine Anordnung zum Ausblenden von Störsignalen auf Signalleitungen vorgeschlagen, die gewährleistet, daß ein störungsfreies Originalsignal ausgewertet werden kann. Bei dieser bekannten Anordnung wird die Übertragung eines Originalsignales in einer ersten Signalleitung und eines invertierten bzw. differenzierten Originalsignales in einer zweiten Signalleitung vorgenommen. Das zuvor invertierte bzw. differenzierte Signal wird am Ende der Signalleitung nochmals invertiert bzw. es wird integriert. Anschließend wird dieses Signal mit dem unverändert übertragenen Signal in einem Und-Gatter verknüpft, wodurch am Ausgang des Und-Gatters ein störungsfreies Originalsignal erhalten wird. Wird im Kabel zwischen dem Sensor und der Auswerteanordnung zusätzlich ein Massekabel mitgeführt, läßt sich durch den Einbau von Zenerdioden zwischen den Signalleitungen und Masse ein Überspannungsschutz erreichen.

Aus der Druckschrift "Schaltbeispiele, Siemens, Ausgabe 1982/83, München, Seite 29 und 30, ist eine Schaltungsanordnung zur störungsfreien Auswertung von Signalen bekannt, die wenigstens zwei Eingänge aufweist, an die ein Sensor, beispielsweise ein Hall-Sensor potentialfrei angeschlossen ist. Die Schaltungsanordnung umfaßt einen Differenzverstärker, der mit den Eingängen in Verbindung steht und eine Ausgangsstufe, die mit dem Differenzstärker in Verbindung steht und das vom Verstärker gelieferte Differenzsignal ggf. in ein Singnal mit Massebezug wandelt. Eine Schaltungsanordnung, die in zwei Betriebsmodi betreibbar ist und von außen umgeschaltet werden kann, wird nicht aufgezeigt.

Die US-PS 4 667 637 beschreibt eine Auswerteschaltung, mit der die Ausgangssignale eines Sensors, beispielsweise eines Klopfsensor möglichst störungsfrei ausgewertet werden sollen. Zur Verstärkung der Signale dient ein Differenzverstärker. Der Sensoreingang ist gegen Masse geschaltet. Eine Umschaltung derart, dass ein potentialfreier Anschluß des Klopfsensors möglich ist, ist nicht vorgesehen.

### Vorteile der Erfindung

Die erfindungsgemäße Schaltungsanordnung zur störungsfreien Auswertung von Signalen mit den Merkmalen des Anspruchs 1 hat demgegenüber den Vorteil, daß eine kostengünstige und dennoch störsichere Signalauswertung erfolgen kann, bei der Gleichtaktstörungen weitgehend vermieden werden. Erzielt wird dieser Vorteil, indem die Signalauswerteschaltung in differentieller Schaltungstechnik aufgebaut wird unter Verwendung einer "switched-capacitor-Technik". Besonders vorteilhaft ist, daß der Betriebsmodus der Auswerteschaltung sowohl symmetrisch als auch unsymmetrisch gewählt werden kann, daß also die Sensoren, deren Ausgangssignale ausgewertet werden sollen, so an die Auswerteschaltung anschließbar sind, daß im unsymmetrischen Betriebsmodus ein Anschluß mit Massebezug möglich ist und bei symmetrischem Betriebsmodus ein potentialfreier Anschluß möglich ist. Durch die vorteilhafte Auswahlmöglichkeit des Betriebsmodus kann die erfindungsgemäße Schaltungsanordnung sowohl mit konventionellen Sensoren, beispielsweise konventionellen Klopfsensoren mit geschirmten Anschlußleitungen als auch mit Sensoren mit ungeschirmten (twisted-pair-) Leitungen betrieben werden. Diese Kombination der Schaltungsanordnung mit Sensoren, beispielsweise Klopfsensoren mit ungeschirmten Leitungen, ist eine vorteilhafte Lösung, die eine kostengünstige und dennoch störsichere Realisierung eines Klopfauswertesystemes ermöglicht.

Ein besonderer Vorteil der erfindungsgemäßen Schaltungsanordnung wird erzielt durch die Möglichkeit, den Betriebsmodus von außen festzulegen. Diese Festlegung kann beispielsweise über einen programmierbaren Steuerpin erfolgen. Es ist somit möglich, die Auswerteschaltung von außen an die gewünschten Erfordernisse, d. h. für symmetrischen Betriebsmodus oder unsymmetrischen Betriebsmodus anzupassen, wodurch beispielsweise bei vier Signaleingängen entweder vier Sensoren unsymmetrisch, d. h. mit Massebezug oder zwei Sensoren symmetrisch, d. h. potentialfrei anschließbar sind.

Die weiteren Vorteile der Erfindung werden durch die in den Unteransprüchen aufgeführten Maßnahmen erzielt.

### Zeichnung

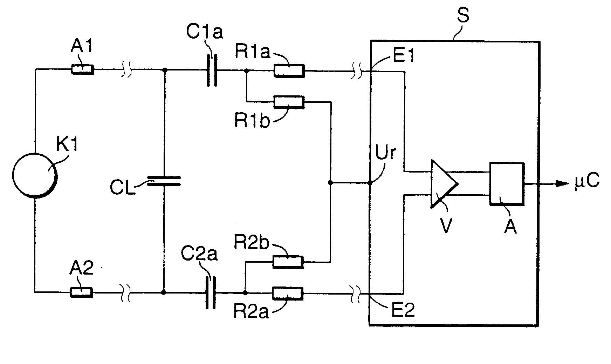

Ein Ausführungsbeispiel der Erfindung ist in der einzigen Figur der Zeichnung dargestellt und wird in der nachfolgenden Beschreibung näher erläutert.

### Beschreibung

In der Figur ist ein Ausführungsbeispiel der Erfindung dargestellt, bei dem die Ausgangssignale eines Klopfsensors K1 ausgewertet werden sollen. Der Klopfsensor K1 weist zwei Anschlußklemmen A1, A2 auf, über die der Klopfsensor K1 mit der Signalaufbereitungsschaltung S in Verbindung steht. Zwischen dem Klopfsensor K1 und der Signalaufbereitungsschaltung S liegt ein passives Ankoppelnetzwerk. Dieses passive Ankoppelnetzwerk umfaßt einen Kondensator CL, der zwischen den Anschlußklemmen A1, A2 des Klopfsensors K1 liegt sowie zwei parallelgeschaltete Kondensatoren C1a und C2a. Zwischen diesen beiden Kondensatoren liegen die Widerstände R1b und R2b. Der Kondensator C1a ist weiterhin über einen Widerstand R1a mit dem Eingang E1 und der Kondensator C2a ist über den Widerstand R2a mit dem Eingang E2 der Signalaufbereitungsschaltung S verbunden. Die Verbindung zwischen den beiden Widerständen R1b und R2b führt auf einen Referenzspannungseingang, an dem die Spannung Ur anliegt.

Die Signalaufbereitungsschaltung S umfaßt einen differentiellen Eingangsverstärker V, der mit den beiden Eingängen E1 und E2 in Verbindung steht. Dem Verstärker V sind nicht dargestellte Signalaufbereitungsstufen nachgeschaltet, die beispielsweise wenigstens einen Bandpaß und/oder einen Gleichrichter und/oder einen Integrator umfassen und beispielsweise ebenfalls in differentieller Schaltungstechnik ausgelegt sind.

An diese Signalaufbereitungsstufen schließt sich eine Ausgangsstufe A an, die das Differenzsignal in ein unsymmetrisches Signal mit Massebezug wandeln kann und dieses über einen Analog-/Digital-Wandler eines Mikrocomputers µc zur weiteren Auswertung zur Verfügung stellt.

Bei dem in der Figur dargestellten Ausführungsbeispiel sind die ungeschirmt ausgeführten Anschlüsse eines Klopfsensors K1 beispielsweise über verdrillte Leitungen potentialfrei an die beiden Eingänge E1, E2 der Signalaufbereitungsschaltung S angeschlossen. Die Eingangsstufe dieser Auswerteschaltung ist zwecks Unterdrückung von Gleichtaktstörungen als Differenzverstärkerstufe aufgebaut, insbesondere als "switched-capacitor-Verstärker" mit mehrstufig einstellbarer Verstärkung. Die nachgeschalteten Signalaufbereitungsstufen können ebenfalls in differentieller Schaltungstechnik ausgelegt sein. Dies gilt insbesondere für Bandpässe, Gleichrichter oder Integratoren. Die Ausgestaltung in switched-capacitor-Technik erlaubt eine kostengünstige und platzsparende Integration der notwendigen Analogfunktionen in Halbleiterprozessoren, beispielsweise in HCMOS-Technik.

Da die Ausgangsstufe der Signalaufbereitungsschaltung das Differenzsignal in ein unsymmetrisches Signal mit Massebezug umwandeln kann, das dann letztendlich dem Mikrocomputer zur Verfügung gestellt wird, lassen sich verschiedene Signalauswertungen realisieren. Bei einem Klopferkennungssystem, das mehrere Klopfsensoren, beispielsweise zwei Klopfsensoren umfaßt, die über jeweils zwei Eingänge mit der Signalaufbereitungsschaltung verbunden sind, können diese zwei Klopfsensoren symmetrisch, d. h. potentialfrei angeschlossen werden. In diesem Modus werden dann die Klopfsensorsignale voll differentiell verarbeitet.

Wird dagegen eine Signalaufbereitungsschaltung mit vier Eingängen eingesetzt, um bis zu vier Klopfsensoren auszuwerten, wird ein unsymmetrischer Betriebsmodus gewählt, bei dem die Klopfsensoren mit Massebezug an die Signalaufbereitungsschaltung angeschlossen werden. In diesem Modus dient eine in der Signalaufbereitungsschaltung erzeugte feste Referenzspannung Ur als Bezugsspannung für die differentielle Signalverarbeitung.

Weist die Signalaufbereitungsschaltung einen zusätzlichen von außen zugängigen Steuerpin auf, kann der Betriebsmodus jeweils von außen über diesen Steuerpin programmiert werden. Es kann also von außen der Betriebsmodus gewählt werden, so daß mit der gleichen Anzahl von Eingängen und der gleichen Signalaufbereitungsschaltung entweder zwei Klopfsensoren potentialfrei oder bis zu vier Klopfsensoren mit Massebezug anschließbar sind und es kann eine entsprechende Signalverarbeitung im einen oder anderen Betriebsmodus erfolgen.

Durch Wahl des Betriebsmodus lassen sich Sensoren mit ungeschirmten (twisted-pair)Leitungen zwischen Sensor und Signalaufbereitung oder auch Sensoren mit geschirmten Anschlußleitungen anschließen. Die Kombination der Schaltungsanordnung, die als Auswertebaustein aufgebaut sein kann, mit Klopfsensoren mit ungeschirmten Leitungen, ermöglicht eine einfache, kostengünstige und dennoch störsichere Realisierung eines Klopfauswertesystems. Im Ausführungsbeispiel wird eine Auswertung von Klopfsensorsignalen beschrieben, der Einsatz der erfindungsgemäßen Schaltungsanordnung ist jedoch nicht auf Klopfsensoren beschränkt sondern kann auch in Verbindung mit der Auswertung anderer Sensoren eingesetzt werden.

## Patentansprüche

1. Schaltungsanordnung zur störungsfreien Auswertung von Signalen, insbesondere von Ausgangssignalen von Klopfsensoren, mit wenigstens zwei Eingängen, an die entweder ein Sensor potentialfrei oder zwei Sensoren mit Massebezug angeschlossen werden, mit einem Differenzverstärker, der mit den Eingängen in Verbindung steht und mit einer Ausgangsstufe, die das vom Differenzverstärker gelieferte Differenzsignal gegebenenfalls in ein Signal mit Massebezug wandelt, **dadurch gekennzeichnet, daß** die Schaltungsanordnung in Swiched-Capacitor-Technik aufgebaut ist und in zwei Betriebsmoden betreibbar ist, wobei auf den ersten Betriebsmodus bei potentialfreiem Anschluß mit symmetrischem Signal und auf den zweiten Betriebsmodus bei potentialbezogenem Anschluß mit unsymmetrischem Signal umgeschaltet wird und die Umschaltung von aussen erfolgt.

2. Schaltungsanordnung nach Anspruch 1, **dadurch gekennzeichnet, daß** die Wahl des Betriebsmodus über einen Steuerpin programmierbar ist.

3. Schaltungsanordnung nach einem der vorhergehenden Ansprüche, **dadurch gekennzeichnet, daß** zwischen dem Sensor oder den Sensoren und den Eingängen (E1), (E2) einer Signalaufbereitungsschaltung (S) ein passives Ankoppelnetzwerk vorhanden ist.

4. Schaltungsanordnung nach Anspruch 3, **dadurch gekennzeichnet, daß** das passive Ankoppelnetzwerk symmetrisch ist und einen ersten Kondensator (CL) zwischen den Anschlüssen des Sensors (K1) umfaßt und zwei weitere Kondensatoren (C1a, C2a), die einerseits mit den Klemmen (A1) bzw. (A2) des Sensors (K1) in Verbindung stehen und andererseits über Widerstände (R1a, R2a) mit den Eingängen (E1) bzw. (E2) der Signalaufbereitungsschaltung (S) verbunden sind und über Widerstände (R1b, R2b) mit einem Anschluß, an dem eine Referenzspannung (Ur) anliegt verbunden sind.

5. Schaltungsanordnung nach einem der vorhergehenden Ansprüche, **dadurch gekennzeichnet, daß** dem Differenzverstärker (V) Signalverarbeitungsstufen, insbesondere wenigstens ein Bandpaß und/oder wenigstens ein Gleichrichter und/oder wenigstens ein Integrator nachgeschaltet sind.

6. Schaltungsanordnung nach einem der vorhergehenden Ansprüche, **dadurch gekennzeichnet, daß** die Ausgangsstufe (A) der Signalaufbereitungsschaltung (S) über einen Analog-/DigitalWandler mit einem Mikrocomputer in Verbindung steht und die Signalauswertung in diesem Mikrocomputer stattfindet.

7. Schaltungsanordnung nach einem der vorhergehen Ansprüche, **dadurch gekennzeichnet, daß** sie zur Auswertung der Ausgangssignale von zwei Klopfsensoren, die über ungeschirmte Leitungen potentialfrei an je zwei Eingänge der Signalaufbereitungsschaltung angeschlossen sind oder zur Auswertung der Ausgangssignale von vier Klopfsensoren, die mit geschirmten Leitungen mit jeweils einem Eingang der Signalaufbereitungsschaltung in Verbindung stehen, verwendet wird.

## Claims

1. Circuit arrangement for the interference-free evaluation of signals, in particular of output signals of knocking sensors, having at least two inputs to which either one sensor is connected in a potential-free manner or two sensors with an earth reference are connected, having a differential amplifier which is connected to the inputs, and having an output stage which, if appropriate, converts the differential signal supplied by the differential amplifier into a signal with earth reference, **characterized in that** the circuit arrangement is designed using switched capacitor technology and can be operated in two operating modes, changing over to the first operating mode in the event of potential-free connection with a balanced signal and changing over to the second operating mode in the event of connection referred to a potential with an unbalanced signal, the changeover being performed externally.

2. Circuit arrangement according to Claim 1, **characterized in that** the selection of the operating mode can be programmed via a control pin.

3. Circuit arrangement according to one of the preceding claims, **characterized in that** a passive coupling network is present between the sensor or the sensors and the inputs (E1, (E2) of a signal conditioning circuit(S).

4. Circuit arrangement according to Claim 3, **characterized in that** the passive coupling network is balanced and comprises a first capacitor (CL) between the connections of the sensor (K1), and two further capacitors (Cla, C2a) which, on the one hand, are connected to the terminals (A1) and, respectively, (A2) of the sensor (K1) and, on the other hand, are connected via resistors (R1a, R2a) to the inputs (E1) and, respectively, (E2) of the signal conditioning circuit (S), and via resistors (R1b, R2b) to a connection at which a reference voltage (Ur) is present.

5. Circuit arrangement according to one of the preceding claims, **characterized in that** signal processing stages, in particular at least one bandpass filter and/or at least one rectifier and/or at least one integrator are connected downstream of the differential amplifier (V).

6. Circuit arrangement according to one of the preceding claims, **characterized in that** the output stage (A) of the signal conditioning circuit (S) is connected via an analogue/digital converter to a microcomputer and the signal evaluation takes place in this microcomputer.

7. Circuit arrangement according to one of the preceding claims, **characterized in that** it is used to evaluate the output signals of two knocking sensors which are connected via unscreened lines in a potential-free manner to two respective inputs of the signal conditioning circuit, or to evaluate the output signals of four knocking sensors which are connected with screened lines to a respective input of the signal conditioning circuit.

## Revendications

1. Circuit pour l'exploitation sans parasites de signaux, notamment de signaux de sortie fournis par les capteurs de cliquetis, comprenant
- au moins deux entrées auxquelles sont reliés soit un capteur hors potentiel, soit deux capteurs avec référence à la masse,
- un amplificateur de différence relié aux entrées et
- un étage de sortie qui convertit le signal de différence fourni par l'amplificateur de différence, le cas échéant en un signal se référant à la masse,
**caractérisé en ce que**
le circuit est réalisé en technique de condensateur commuté et peut fonctionner dans deux modes de fonctionnement,
dans un premier mode de fonctionnement, il reçoit un signal symétrique hors potentiel, et dans un second mode de fonctionnement, avec un branchement rapporté au potentiel, il est commuté par un signal asymétrique, et la commutation se fait de l'extérieur.

2. Circuit selon la revendication 1,
**caractérisé en ce que**
le choix du mode de fonctionnement est programmable par une broche de commande.

3. Circuit selon l'une quelconque des revendications précédentes,
**caractérisé par**
un réseau de couplage passif entre le ou les capteurs et les entrées (E1), (E2) d'un circuit de traitement de signal (S).

4. Circuit selon la revendication 3,
**caractérisé en ce que**
le réseau de couplage passif est symétrique et comprend un premier condensateur (CL) entre les bornes du capteur (K1) et deux autres condensateurs (C1a, C2a) reliés, d'une part, aux bornes (A1), (A2) du capteur (K1), et, d'autre part, par des résistances (R1a, R2a) aux entrées (E1), (E2) du circuit de traitement de signal (S), et par des résistances (R1b, R2b) à une borne qui reçoit une tension de référence (Ur).

5. Circuit selon l'une quelconque des revendications précédentes,
**caractérisé en ce que**
l'amplificateur de différence (V) est suivi d'étages de traitement de signal, notamment d'au moins un filtre passe-bande et/ou d'au moins un redresseur et/ou d'au moins un intégrateur.

6. Circuit selon l'une quelconque des revendications précédentes,
**caractérisé en ce que**
l'étage de sortie (A) du circuit de traitement de signal (S) est relié par un convertisseur analogique/numérique à un micro-ordinateur et le traitement du signal est effectué dans ce micro-ordinateur.

7. Circuit selon l'une quelconque des revendications précédentes,
**caractérisé en ce qu'**
il est utilisé pour l'exploitation des signaux de sortie de deux capteurs de cliquetis reliés par des lignes non blindées, hors potentiel, à deux entrées du circuit de traitement de signal, ou pour l'exploitation des signaux de sortie de quatre capteurs de cliquetis qui sont reliés par des lignes blindées, chacun à une entrée du circuit de traitement de signal.
